Europäisches Patentamt

European Patent Office

Office européen des brevets

(19)

(11) Numéro de publication : **0 098 208**

**B1**

(12) **FASCICULE DE BREVET EUROPÉEN**

(45) Date de publication du fascicule du brevet :
**10.09.86**

(51) Int. Cl.⁴ : **G 01 F 23/28**

(21) Numéro de dépôt : **83401284.1**

(22) Date de dépôt : **21.06.83**

(54) **Dispositif de mesure du niveau d'eau dans une enceinte.**

(30) Priorité : **24.06.82 FR 8211078**

(43) Date de publication de la demande :
**11.01.84 Bulletin 84/02**

(45) Mention de la délivrance du brevet :
**10.09.86 Bulletin 86/37**

(84) Etats contractants désignés :
**BE CH DE GB IT LI NL SE**

(56) Documents cités :
**EP-A- 0 025 389**
**DE-B- 1 179 729**
**US-A- 3 594 575**
**US-A- 4 268 753**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Bonnemay, Alain**
**20, Allée des Bouleaux**
**F-91400 Orsay (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

L'invention concerne un dispositif pour mesurer le niveau d'un liquide contenu dans une enceinte. Elle s'applique en particulier à la mesure du niveau de l'eau liquide contenue dans le pressuriseur d'un réacteur nucléaire à eau sous pression (réacteur PWR).

Dans les réacteurs nucléaires du type PWR, le maintien d'une pression élevée dans le circuit primaire est assuré par un pressuriseur constitué par une enceinte fermée dans laquelle on maintient la pression du circuit primaire par équilibre entre la phase liquide et la phase gazeuse de l'eau.

Il existe dans l'état de la technique un grand nombre de dispositifs permettant de mesurer le niveau de la phase liquide dans un pressuriseur, comme par exemple des dispositifs de mesure par différence de pression. Mais ces dispositifs connus posent des problèmes de représentativité (dérives, hystérésis, recalages). En outre, la transition entre la phase liquide et la phase vapeur n'est pas toujours franche. Dans certaines situations, il existe une zone intermédiaire diphasique, comportant des bulles de vapeur dans l'eau liquide. Un dispositif par différence de pression ne permet pas de déceler une telle situation. C'est pourquoi on a cherché à réaliser des dispositifs de mesure de niveau basés sur les variations d'absorption d'un rayonnement lorsque ce rayonnement traverse des milieux de différentes natures. Ainsi, on connaît des dispositifs de mesure du niveau d'eau dans un pressuriseur au moyen d'une ou plusieurs sources de rayonnement disposées à proximité de la paroi de l'enceinte et un ou plusieurs détecteurs de rayonnement recevant le rayonnement ayant traversé l'enceinte. La mesure du signal reçu est ensuite utilisée pour déduire le niveau de la surface du liquide et/ou la densité locale du mélange diphasique.

A titre d'exemple, le document EP-A-0 025 389 décrit un dispositif de ce type dans lequel on compare le résultat des mesures à une bibliothèque de courbes préétablies dans le cas des différentes configurations diphasiques possibles.

Cependant, ce dispositif présente l'inconvénient de ne pas permettre une mesure directe et rapide, puisqu'il exige la comparaison de carte axiales de mesure à une bibliothèque de courbes préétablies. En outre, il nécessite une source de rayonnement importante, de l'ordre de 1 000 Curies, ce qui pose des problèmes de radioprotection.

Enfin, pour distinguer le rayonnement de la source de celui de l'eau activée et de celui des dépôts actifs apparaissant sur les parois, il faut prévoir un détecteur supplémentaire placé de telle façon qu'il ne soit pas soumis au rayonnement des sources, ce qui permet de corriger dans le taux de comptage total la partie qui est due à l'activité de l'eau et des dépôts.

On connaît également (DE-B-1 179 729) un dispositif de contrôle de niveau utilisant une source de rayonnement radioctive, et deux détecteurs de ce rayonnement diamétralement opposés par rapport à une enceinte contenant un fluide dont on souhaite mesurer le niveau. La possibilité de réunir les signaux délivrés par les deux détecteurs dans un diviseur est mentionnée.

L'invention concerne un dispositif de mesure du niveau d'eau dans une enceinte applicable dans le cas d'une enceinte radiactive, qui remédie à ces inconvénients par le traitement des signaux reçus par les détecteurs de rayonnements.

De manière plus précise, le dispositif de mesure de l'invention comprend un ensemble, ledit ensemble étant composé d'une source de rayonnement disposée à proximité de la paroi de l'enceinte, et de n détecteurs de rayonnement $d_i$, portant des indices $i = 1$ à $n$, disposés dans cet ordre sur une même verticale et séparés de la source de rayonnement par un trajet traversant l'enceinte, le détecteur $d_i$ délivrant après amplification un signal $\mu_i$ proportionnel à la quantité du rayonnement reçu, ce dispositif étant caractérisé en ce qu'il comporte des moyens de traitement des signaux $\mu_i$, avec $i = 1$ à $n$, délivrés par les détecteurs $d_i$, ces moyens étant constitués par n — 1 circuits-diviseurs $e_i$ portant les indices 1 à n — 1, deux détecteurs $d_i$, $d_{i+1}$ portant des indices consécutifs étant reliés aux circuits diviseurs $e_i$ qui effectuent le quotient $\mu_i/\mu_{i+1}$, le niveau étant alors situé dans l'intervalle entre les détecteurs $d_i$ et $d_{i+1}$ pour lesquels le quotient $\mu_i/\mu_{i+1}$ est maximal.

On obtient ainsi n — 1 signaux. On peut prouver que l'un des signaux est nettement plus grand que les autres et que le pic obtenu caractérise le niveau d'eau dans l'enceinte du pressuriseur. De façon plus précise, le niveau est situé entre les deux détecteurs de rayonnement pour lesquels on a obtenu la valeur de pic.

Par ailleurs, les signaux obtenus sont indépendants de l'intensité de la source de rayonnement, ce qui permet de ne faire aucune mesure de celle-ci et de n'être pas influencé par les variations dans le temps de cette source ou des absorptions du rayonnement qu'elle émet.

La mesure du niveau est ainsi obtenue directement, sans qu'il soit nécessaire de comparer les mesures des capteurs à des courbes préétablies, et sans nécessiter l'utilisation d'un capteur supplémentaire pour tenir compte de l'activité de l'eau.

De plus, la mesure est obtenue de façon quasi instantanée, ce qui permet de suivre les variations de niveau en temps réel. Selon un mode de réalisation préférentiel, le dispositif de l'invention comporte n — 2 circuits soustracteurs $s_i$ portant des indices consécutifs 1 à n — 2, les signaux $q_i$, $q_{i+1}$ issus de deux circuits diviseurs $e_i$, $e_{i+1}$ portant des indices consécutifs étant introduits dans le circuit soustracteur $s_i$ qui effectue la

différence $q_i - q_{i+1}$, les limites haute et basse de la zone diphasique étant alors situées dans l'intervalle entre les détecteurs $d_i$, $d_{i+1}$ pour lesquels les signaux $s_i$ présentent un minimum, et dans l'intervalle pour lequel ces signaux présentent un maximum.

De préférence, on interpose entre la paroi de l'enceinte et chacun desdits détecteurs de rayonnement un dispositif de collimation du rayonnement ayant traversé l'enceinte. La fonction de ce dispositif de collimation est de réduire la contribution du rayonnement parasite provenant de l'eau activée et des produits de corrosion radioactifs déposés sur les parois. L'utilisation de dispositifs de collimation permet d'augmenter l'amplitude des pics observés et par conséquent de réduire l'intensité de la source de rayonnement.

Enfin, dans le cas où la hauteur de l'enceinte est importante, on peut prévoir plusieurs dispositifs de mesure superposés, ces dispositifs étant orientés selon des plans sécants et positionnés en hauteur de manière à obtenir un recouvrement partiel des zones surveillées par chacun d'eux. Dans ce cas, la présence d'un dispositif de collimation du rayonnement reçu par les détecteurs est indispensable.

D'autres caractéristiques et avantages de l'invention apparaîtront clairement à la lecture de la description qui suit, donnée en référence aux dessins annexés, sur lesquels :

la figure 1 représente une vue schématique en coupe d'un pressuriseur de réacteur PWR équipé d'un dispositif de mesure du niveau de l'eau conforme à l'invention ;

la figure 2 est une courbe des signaux issus des diviseurs faisant partie du dispositif de la figure 1 ;

la figure 3 est une courbe des signaux issus des soustracteurs faisant partie du dispositif de la figure 1 ;

les figures 4 et 5 représentent une vue en coupe longitudinale et une vue de bout d'un dispositif de collimation du rayonnement reçu par les détecteurs ;

les figures 6 et 7 représentent schématiquement une vue en coupe longitudinale et en section transversale d'un pressuriseur équipé d'un dispositif de mesure du niveau de l'eau adapté au cas d'une enceinte de grande hauteur.

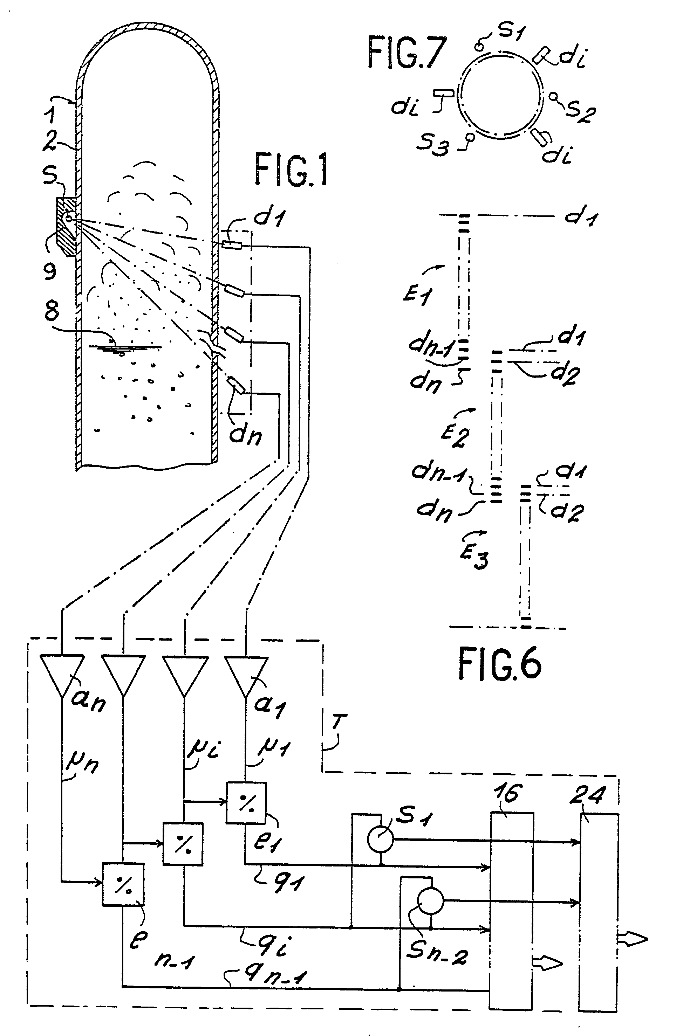

On a représenté sur la figure 1 une vue schématique en coupe d'un pressuriseur de réacteur PWR équipé d'un dispositif de mesure du niveau de l'eau conforme à la présente invention.

Le pressuriseur 1 se présente comme un cylindre vertical de 2 m environ de diamètre et de 12 m environ de hauteur. A l'intérieur, l'eau et la vapeur se trouvent en équilibre thermodynamique à une température égale à la température de saturation correspondant à une pression nominale du circuit primaire. Le rôle du pressuriseur est de maintenir cette pression sensiblement constante lors des transitoires de charge. Ceci s'effectue par des systèmes de chauffage ou de refroidissement. On augmente la pression en vaporisant l'eau, on la réduit en condensant la vapeur.

Le dispositif de l'invention a précisément pour objet un dispositif de mesure du niveau d'eau dans le pressuriseur 1, qui permet d'obtenir une mesure instantanée et de suivre les variations du niveau 8.

Ce dispositif comporte une source S disposée à proximité de la paroi 2 du pressuriseur, et à l'extérieur de celle-ci. La source S est disposée à l'intérieur d'un conteneur en plomb 9 qui protège l'environnement extérieur contre le rayonnement émis. La source S est par exemple une source υ d'une intensité de 200 Curies.

Egalement à l'extérieur de la paroi 2, et diamétralement opposés à la source S, on trouve n détecteurs de rayonnement repérés $d_1$ à $d_n$. Les détecteurs sont situés sur une même génératrice verticale, à égale distance l'un de l'autre. Dans l'exemple de réalisation décrit, il y a dix-huit capteurs situés à 20 cm l'un de l'autre. Le dispositif permet donc de surveiller le niveau du liquide 8 sur une hauteur de 3,4 m. Les détecteurs sont numérotés à partir de celui qui est situé le plus proche de la source S. De préférence, la source S est située à 50 cm au-dessus du détecteur le plus élevé, c'est-à-dire le détecteur $d_1$ et l'angle moyen du faisceau avec le plan horizontal est d'une quarantaine de degrés. Ces conditions permettent d'optimiser le signal utile.

La source S et les n détecteurs qui lui sont associés forment l'ensemble E.

Chaque détecteur $d_i$ est relié à un amplificateur $a_i$ qui amplifie les signaux reçus par ce détecteur. Les gains des amplificateurs $a_i$ sont sensiblement égaux lorsque les détecteurs sont équidistants ; ces derniers pourraient ne pas être équidistants ; dans ce cas, une modification relative des différents gains permettrait de reconstituer le fonctionnement correct du dispositif. Après amplification, ces signaux sont envoyés dans un circuit diviseur $e_i$. Le circuit diviseur $e_i$ effectue le quotient du signal provenant du détecteur $d_i$ par le signal provenant du détecteur $d_{i+1}$. Le quotient $q_i$ est dirigé sur l'opérateur 16 qui détermine l'indice du détecteur correspondant à la plus grande valeur du quotient $q_i$. Ensuite, l'opérateur 16 visualise cette information pour l'utilisateur.

L'opérateur 16 peut comporter un circuit de détermination de maximum, par exemple un détecteur de maximum, ou une série de circuits de comparaison à un seuil, associés chacun à un circuit diviseur $e_i$, et un dispositif de visualisation, par exemple une série de voyants lumineux dont l'un est obturé pour repérer le niveau, sous la commande du circuit de détermination de maximum. Dans une version simplifiée, chaque circuit diviseur $e_i$ est associé à un appareil de mesure et l'utilisateur détermine lui-même à l'œil le maximun du signal.

La rapidité de réponse du dispositif est de quelques dizaines de microsecondes. Elle permet de suivre instantanément les variations du niveau d'eau.

Par ailleurs, on remarque qu'il n'est pas nécessaire de prévoir un dispositif de collimation entre la source S et chacun des détecteurs de rayonnement.

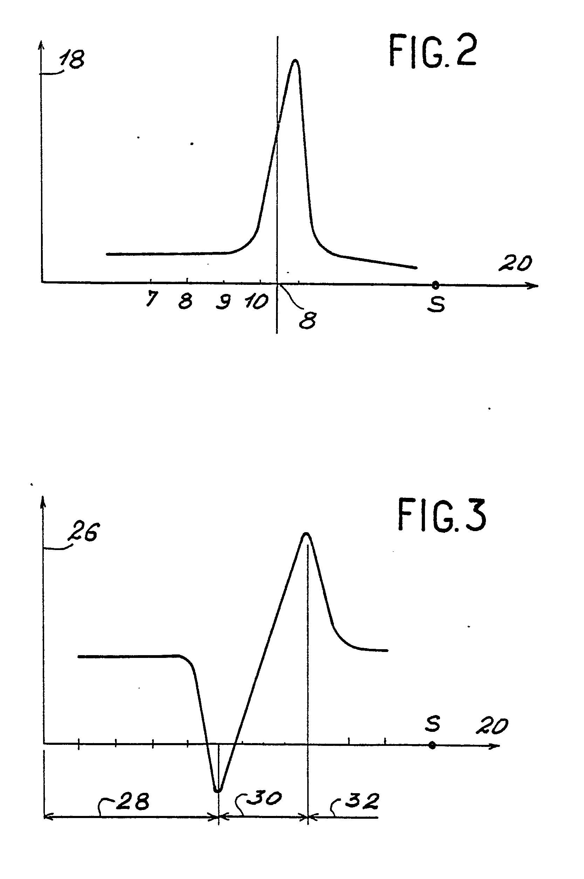

On a représenté sur la figure 2 une courbe donnant l'amplitude 18 des quotients $q_1$ à $q_{17}$ émis par chacun des circuits diviseurs. En effet, il y a dix-huit détecteurs de rayonnement $d_1$ à $d_{18}$, mais il y a seulement dix-sept circuits diviseurs correspondant à chacun des dix-sept segments de 20 cm en lesquels la hauteur à surveiller, qui est de 3,40 m, est segmentée.

Comme on peut le constater sur la figure 2, le signal d'amplitude maximum correspond au circuit diviseur $e_{11}$. Par conséquent, le niveau du liquide se trouve entre le détecteur $d_{10}$ et le détecteur $d_{11}$.

De préférence, le dispositif de l'invention comporte n — 2 circuits soustracteurs repérés $s_1$ à $s_{n-2}$. Les quotients $q_1$ à $q_{n-1}$ issues des n — 1 diviseurs $e_1$ à $e_{n-1}$ sont soustraits deux à deux. On effectue ainsi la différence $q_i - q_{i+1} = t_i$. Chacune de ces différences $t_i$ est introduite dans un opérateur 24 analogue à l'opérateur 16.

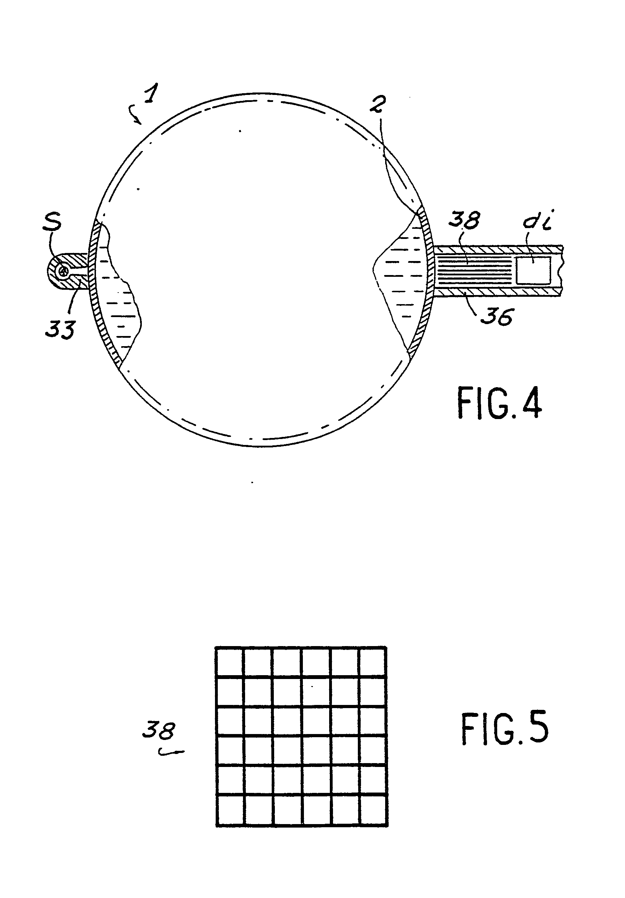

On a représenté sur la figure 3 l'amplitude 26 des signaux $t_i$ en fonction de la distance verticale 20. Comme on peut le constater, les signaux $t_i$ présentent deux pics opposés dont la détection permet la localisation de la couche diphasique. La zone 28 correspond à l'eau liquide, la zone 30 à la couche diphasique constituée à sa partie inférieure par des bulles de vapeur présentes dans l'eau et à sa partie supérieure par des gouttelettes d'eau dans la vapeur. La zone 32 représente la vapeur.

Afin d'augmenter la sensibilité du dispositif de mesure qui vient d'être décrit, on peut, bien que cela ne soit pas indispensable, interposer un dispositif de collimation entre la source S et chacun des détecteurs $d_i$ de rayonnement. La présence d'un dispositif de collimation permet une meilleure discrimination du rayonnement provenant de l'eau activée et des dépôts radioactifs sur les parois 2 de l'enceinte. Les pics représentés sur les figures 2 et 3 sont ainsi plus accusés.

On a représenté sur les figures 4 et 5 un dispositif de collimation qui peut être utilisé avec l'invention. La figure 4 est une section transversale à travers le pressuriseur 1 passant par la source S et un collimateur 38. Le blindage de plomb 33 assure la protection biologique, mais comme on peut le voir sur la figure 1, dans le sens vertical, l'angle d'ouverture est suffisamment ouvert pour que le rayonnement émis par la source atteigne chacun des détecteurs et la source est peu éloignée de la paroi du pressuriseur. Aucune collimation n'est nécessaire dans le sens horizontal contrairement au cas du document EP-A-0 025 389 citée en introduction, ce qui permet de réduire l'encombrement du blindage.

Disposé sur un même diamètre du pressuriseur 1, on trouve le détecteur $d_i$. Ce détecteur peut être un scintillateur à iodure de sodium. Il est logé dans un blindage 36. Entre le détecteur $d_i$ et la paroi 2, on trouve un collimateur 38 formé de plaques métalliques parallèles aux rayonnements incidents, c'est-à-dire dirigé vers la source S et dont la section peut être par exemple en forme de quadrillage. Ce quadrillage est constitué par un ensemble de tôles métalliques, comme on peut le voir sur la figure 5. Le pas des tôles est par exemple de 1 cm mais la longueur du collimateur 38 n'a nullement besoin d'être aussi importante que dans le cas du document EP-A-0 025 389. Elle peut être par exemple de 50 cm, ce qui permet de réduire l'encombrement du dispositif.

Lorsque la hauteur sur laquelle on désire surveiller les variations du niveau est importante, on peut prévoir plusieurs dispositifs semblables à celui qui a été décrit en référence aux figures 1 à 5, superposés l'un au-dessus de l'autre, comme on l'a schématisé sur les figures 6 et 7. La figure 6 représente schématiquement une vue en coupe longitudinale d'un pressuriseur 1 comportant trois ensembles $E_1$, $E_2$, $E_3$ superposés. La figure 7 est une coupe transversale du pressuriseur 1 qui montre que chacun des ensembles $E_1$ à $E_3$ est disposé dans un plan diamétral sécant. Cette disposition a pour but d'éviter que le rayonnement émis par une source, par exemple la source $S_1$, n'atteigne les détecteurs de rayonnement d'un autre ensemble.

Sur la figure 7, les plans qui contiennent les ensembles $E_1$ à $E_3$ sont situés à 120° l'un de l'autre. Toutefois, cette disposition est seulement préférentielle. L'angle des plans n'influe pas sur la précision des mesures à partir du moment où ces plans sont sécants.

Les signaux émis par les détecteurs de chacun des ensembles $E_1$ à $E_3$ sont traités par des moyens de traitement $T_1$ à $T_3$ des signaux émis identiques à ceux qui ont été décrits en référence aux figures 1 à 3. Les signaux issus de chaque détecteur $d_i$ sont amplifiés par un circuit amplificateur $a_i$. Les signaux $\mu_i$ sont introduits deux à deux dans un circuit diviseur $e_i$ qui effectue le quotient $\mu_i/\mu_{i+1}$. Ces quotients $q_i$ sont introduits dans un opérateur 16 qui extrait le signal le plus élevé correspondant au niveau de l'eau dans le pressuriseur. Par ailleurs, ces moyens de traitement du signal sont de préférence complétés par n — 2 circuits soustracteurs qui effectuent les différences $t_i = q_i - q_{i+1}$. Ces différences sont introduites dans un opérateur 24 qui extrait deux valeurs de pics opposés qui délimitent une zone correspondant à la couche diphasique.

Dans l'exemple de réalisation décrit, chaque ensemble E comporte dix-huit capteurs de rayonnement. Afin de permettre de suivre sans discontinuité les variations du niveau, il y a un recouvrement partiel des zones surveillées par les ensembles $E_1$ et $E_2$ d'une part, et par les ensembles $E_2$ et $E_3$ d'autre part. La zone de recouvrement peut comprendre deux détecteurs, comme représenté sur la figure 6, ou éventuellement trois. Les détecteurs $d_{n-1}$ et $d_n$ de l'ensemble $E_1$ sont situés aux mêmes cotes verticales que les détecteurs $d_1$ et $d_2$ de l'ensemble $E_2$. Cependant, leur position dans un plan horizontal est différente, comme le montre la figure 7. Il en va de même dans le cas de la zone de recouvrement des ensembles $E_2$ et $E_3$. Les détecteurs $d_{n-1}$ et $d_n$ de l'ensemble $E_2$ sont situés aux mêmes cotes verticales que les détecteurs $d_1$ et $d_2$ de l'ensemble $E_3$.

Ce recouvrement permet de ne pas avoir à tenir compte des différences d'intensité entre les sources des différents ensembles ; de telles différences d'intensité sont en effet susceptibles dans le dispositif de l'invention, de créer des pics parasites d'importance comparable avec les pics utiles.

Il faut remarquer que dans le cas du dispositif décrit en référence aux figures 6 et 7, la présence de dispositifs de collimation, comme par exemple celui qui a été décrit en référence aux figures 4 et 5, est indispensable. En effet, il est nécessaire que les détecteurs de rayonnement d'un ensemble ne soient pas influencés par la source de rayonnement d'un autre ensemble. En conséquence, la présence de dispositifs de collimation qui était seulement une disposition préférentielle dans le cas du mode de réalisation de la figure 1 devient indispensable.

Dans toute la description précédente, on a indiqué que les détecteurs de rayonnement sont diamétralement opposés à la source de rayonnement à laquelle ils sont associés ; cette disposition a été préférée car elle minimise l'effet de l'absorption, par les parois, du rayonnement des sources, et qu'elle réalise au mieux le moyennage des perturbations de niveau ; elle est particulièrement recommandée dans le cas des pressuriseurs des réacteurs PWR, qui, devant supporter des pressions élevées, présentent une paroi épaisse, et dans lesquels la transition entre phase liquide et phase vapeur n'est pas franche ; toute autre disposition est toutefois possible et ne remet pas en cause le fonctionnement de l'invention.

## Revendications

1. Dispositif de mesure du niveau d'un liquide dans une enceinte, le dispositif comprenant un ensemble (E), ledit ensemble étant composé d'une source de rayonnement (S) disposée à proximité de la paroi de l'enceinte, et de n détecteurs de rayonnement $d_i$, portant des indices i = 1 à n, disposés dans cet ordre sur une même verticale et séparés de la source de rayonnement par un trajet traversant l'enceinte, le détecteur $d_i$ délivrant après amplification un signal $\mu_i$ proportionnel à la quantité du rayonnement reçu, caractérisé en ce qu'il comporte des moyens (T) de traitement des signaux $\mu_i$, avec i = 1 à n, délivrés par les détecteurs $d_i$, ces moyens (T) étant constitués par n — 1 circuits diviseurs $e_i$ portant des indices 1 à n — 1, deux détecteurs $d_i$, $d_{i+1}$ portant des indices consécutifs étant reliés aux circuits diviseurs $e_i$ qui effectue le quotient $\mu_i/\mu_{i+1}$, le niveau étant alors situé dans l'intervalle entre les détecteurs $d_i$ et $d_{i+1}$ pour lesquels le quotient $\mu_i/\mu_{i+1}$ est maximal.

2. Dispositif selon la revendication 1, caractérisé en ce qu'il comporte n — 2 circuits soustrac-teurs $s_i$ portant des indices consécutifs 1 à n — 2, les signaux $q_i$, $q_{i+1}$ issus de deux circuits diviseurs $e_i$, $e_{i+1}$ portant des indices consécutifs étant introduits dans le circuit soustracteur $s_i$ qui effectue la différence $q_i - q_{i+1}$, les limites hautes et basses de la zone diphasique étant alors situées dans l'intervalle entre les détecteurs $d_i$, $d_{i+1}$ pour lesquels les signaux $s_i$ présentent un minimum, et dans l'intervalle pour lequel ces signaux présentent un maximum.

3. Dispositif selon l'une quelconque des revendications 1 et 2, caractérisé en ce que les détecteurs de rayonnement $d_i$ sont diamétralement opposés à la source de rayonnement par rapport à l'enceinte.

4. Dispositif selon l'une quelconque des revendications 1 à 3, caractérisé en ce que les détecteurs de rayonnement sont disposés à distance égale les uns des autres.

5. Dispositif selon l'une quelconque des revendications 1 à 4, caractérisé en ce que chaque détecteur de rayonnement $d_1$ à $d_n$ comporte un dispositif de collimation (38) orienté vers la source de rayonnement (S).

6. Dispositif selon l'une quelconque des revendications 1 à 5, caractérisé en ce que la source de rayonnement (S) est disposée à un niveau supérieur à celui des détecteurs.

7. Dispositif selon la revendication 6, caractérisé en ce que l'angle moyen du trajet source-détecteur de l'ensemble (E) est de 40° par rapport au plan horizontal.

8. Appareillage de mesure caractérisé en ce qu'il comporte plusieurs dispositifs de mesure selon l'une quelconque des revendications 1 à 7, les ensembles E ($E_1$, $E_2$, $E_3$) formés par une source de rayonnement S ($S_1$, $S_2$, $S_3$) et par les détecteurs de rayonnement $d_1$ à $d_n$ associés étant orientés selon des plans sécants qui se coupent selon une ligne qui est approximativement confondue avec l'axe longitudinal de l'enceinte, et positionnés en hauteur de manière à obtenir un recouvrement partiel des zones surveillées par chaque dispositif.

9. Appareillage selon la revendication 8, caractérisé en ce que la zone de recouvrement comporte deux ou trois détecteurs $d_i$ situés à la même cote horizontale.

## Claims

1. Apparatus for measuring the level of a liquid in a container, the apparatus comprising an assembly (E), said assembly being composed of a radiation source (S), located near the wall of the vessel, and of n radiation sensors $d_i$ having indices i = 1 to n, disposed in that order along the same vertical line and separated from the radiation source by a trajectory crossing the vessel, each sensor $d_i$ delivering after amplification a signal $\mu_i$ proportional to the quantity of radiation received, characterised in that it comprises means (T) for processing the signals $\mu_i$, where i = 1 to n, delivered by the sensors $d_i$, said means (T) comprising n — 1 divider circuits $e_i$ having

indices 1 to n — 1, two sensors $d_i$, $d_{i+1}$ having consecutive indices being connected to divider circuits $e_i$ which calculate the quotient $\mu_i/\mu_{i+1}$, the level being located in the interval between those sensors $d_i$ and $d_{i+1}$ for which the quotient $\mu_i/\mu_{i+1}$ is a maximum.

2. Apparatus according to claim 1, characterised in that it comprises n — 2 subtractor circuits $s_i$ having consecutive indices 1 to n — 2, the signals $q_i$, $q_{i+1}$ emitted by two divider circuits $e_i$, $e_{i+1}$ having consecutive indices being introduced into subtractor circuit $s_i$ which calculates the difference $q_i - q_{i+1}$, the upper and lower limits of the two phase region being located in the interval between those sensors $d_i$, $d_{i+1}$ for which the signals $s_i$ are at a minimum, and in the interval for which the signals are at a maximum.

3. Apparatus according to either of claims 1 and 2, characterised in that the radiation sensors $d_i$ are diametrically opposite the radiation source with respect to the vessel.

4. Apparatus according to any one of claims 1 to 3, characterised in that the radiation sensors are located at regular intervals from one to another.

5. Apparatus according to any one of claims 1 to 4, characterised in that each radiation sensor $d_1$ to $d_n$ has a collimator (38) oriented towards the radiation source (S).

6. Apparatus according to any one of claims 1 to 5, characterised in that the radiation source (S) is located on a level above that of the sensors.

7. Apparatus according to claim 6, characterised in that the mean angle of the trajectory source-sensor for the assembly (E) is 40° with respect to the horizontal.

8. A measuring instrument characterised in that it comprises a plurality of measuring apparatus according to any one of claims 1 to 7, the assemblies E ($E_1$, $E_2$, $E_3$), each constituted by a radiation source S ($S_1$, $S_2$, $S_3$), and by the associated radiation sensors $d_1$ to $d_m$ being oriented in intersecting planes, which intersect along a line substantially the same as the longitudinal axis of the vessel, and located with respect to height in a manner providing partial overlap of the regions surveyed by each apparatus.

9. An instrument according to claim 8, characterised in that the region of overlap has two or three sensors $d_i$ situated in the same horizontal plane.

**Patentansprüche**

1. Vorrichtung zur Messung des Flüssigkeitspegels in einem geschlossenen Raum, wobei die Vorrichtung umfaßt eine Gesamtheit (E), die aus einer nahe der Kammerwand angeordneten Strahlungsquelle (S) und n Strahlungsdetektoren $d_i$ besteht, die die Indizes i = 1 bis n tragen und in dieser Reihenfolge auf der gleichen Vertikalen angeordnet und von der Strahlungsquelle durch einen die Kammer durchquerenden Durchlauf getrennt sind, wobei der Detektor $d_i$ nach Verstärkung ein Signal $\mu_i$ abgibt, welches der empfangenen Strahlungsmenge proportional ist, dadurch gekennzeichnet, daß die Vorrichtung Mittel (T) zur Verarbeitung der Signale $\mu_i$ mit i = 1 bis n aufweist, die von den Detektoren $d_i$ abgegeben werden, wobei diese Mittel (T) von n — 1 Teilerschaltkreisen $e_i$ mit den Indizes 1 bis n — 1 gebildet sind und die Detektoren $d_i$, $d_{i+1}$, die aufeinanderfolgende Indizes aufweisen, mit den Teilerschaltkreisen $e_i$ verbunden sind, die den Quotienten $\mu_i/\mu_{i+1}$ bilden, und daß der Pegel sich dann in dem Intervall zwischen den Detektoren $d_i$ und $d_{i+1}$ befindet, für den der Quotient $\mu_i/\mu_{i+1}$ maximal ist.

2. Vorrichtung nach Anspruch 1, dadurch gekennzeichnet, daß sie n — 2 Subtraktionsschaltkreis $s_i$ mit den Aufeinanderfolgenden Indizes 1 bis n — 2 aufweist, daß die von den Teilerschaltkreisen $e_i$, $e_{i+1}$, die aufeinanderfolgende Indizes aufweisen, abgegebenen Signale $q_i$, $q_{i+1}$ an den Subtraktionschaltkreis $s_i$ angelegt werden, der den Unterschied $q_i - q_{i+1}$ bildet, und daß sich die obere Grenze und die untere Grenze des Zweiphasenbereiches dann in dem Intervall zwischen den Detektoren $d_i$, $d_{i+1}$, für die die Signale $s_i$ ein Minimum aufweisen, und in dem Intervall, bei dem diese Signale ein Maximum aufweisen, befinder.

3. Vorrichtung nach Anspruch 1 oder 2, dadurch gekennzeichnet, daß die Strahlungsdetektoren $d_i$ der Strahlungsquelle in Bezug auf die Kammer diametral gegenüberliegen.

4. Vorrichtung nach einem der Ansprüche 1 bis 3, dadurch gekennzeichnet, daß die Strahlungsdetektoren voneinander gleich beabstandet sind.

5. Vorrichtung nach einem der Ansprüche 1 bis 4, dadurch gekennzeichnet, daß jeder Strahlungsdetektor $d_i$ bis $d_n$ eine Kollimatorvorrichtung (38) aufweist, die zu der Strahlungsquelle (S) gerichtet ist.

6. Vorrichtung nach einem der Ansprüche 1 bis 5, dadurch gekennzeichnet, daß die Strahlungsquelle (S) auf einer Höhe über derjenigen der Detektoren angeordnet ist.

7. Vorrichtung nach Anspruch 6, dadurch gekennzeichnet, daß der mittlere Winkel des Durchlaufweges Quelle-Detektor der Gesamtheit (E) 40° in Bezug auf eine horizontale Ebene beträgt.

8. Meßapparat, dadurch gekennzeichnet, daß er mehrere Vorrichtungen zur Messung nach einem der Ansprüche 1 bis 7 aufweist, wobei die Gesamtheiten E ($E_1$, $E_2$, $E_3$), die von einer Strahlungsquelle (S $S_1$, $S_2$, $S_3$) und von den zugeordneten Strahlungsdetektoren $d_1$ bis $d_n$ gebildet sind, längs Schnittebenen ausgerichtet sind, die sich in einer Linie schneiden, die ungefähr mit der Längsachse der Kammer zusammenfällt, und der Höhe nach derart positioniert sind, daß eine teilweise Überdeckung der von jeder Vorrichtung erfaßten Bereiche erhalten wird.

9. Apparat nach Anspruch 9, dadurch gekennzeichnet, daß der Überdeckungsbereich zwei oder drei Detektoren $d_i$ umfaßt, die sich auf der gleichen horizontalen Kote befinden.

FIG.1

FIG.7

FIG.6

FIG.2

18

20

7  8  9  10

8

S

FIG.3

26

S  20

28  30  32

FIG.4

FIG.5